# EUROPÄISCHE PATENTSCHRIFT

(11) **EP 1 320 667 B1**
(45) Veröffentlichungstag und Bekanntmachung des Hinweises auf die Patenterteilung: **22.03.2006**
(21) Anmeldenummer: 01965280.9
(22) Anmeldetag: 13.09.2001
(51) Int. Cl.: F01M 1/12, F16N 7/40

(54) **SCHMIERSYSTEM FÜR ARBEITSGERÄT MIT VERBRENNUNGSMOTOR**
LUBRICATION SYSTEM FOR A TOOL WITH A COMBUSTION ENGINE
SYSTEME DE LUBRIFICATION DESTINE A UN OUTIL COMPORTANT UN MOTEUR A COMBUSTION INTERNE

(30) Priorität: 15.09.2000 DE 10045726
(43) Veröffentlichungstag der Anmeldung: 25.06.2003
(73) Patentinhaber: Wacker Construction Equipment AG, 80809 München (DE)
(72) Erfinder: HAUSLER, Wolfgang, 80993 München (DE); SICK, Georg, 82340 Feldafing (DE)
(74) Vertreter: Hoffmann, Jörg Peter
(86) Internationale Anmeldenummer: PCT/EP2001/010601
(87) Internationale Veröffentlichungsnummer: WO 2002/023017

(56) Entgegenhaltungen:
- DE-A- 3 526 194
- DE-A- 4 304 743
- US-A- 4 721 185
- US-A- 5 816 212

## Beschreibung

Die Erfindung betrifft ein Arbeitsgerät gemäß dem Oberbegriff von Patentanspruch 1.

Arbeitsgeräte, insbesondere handgeführte Arbeitsgeräte, wie zum Beispiel ein Stampfer zur Bodenverdichtung, die als Antrieb einen Verbrennungsmotor aufweisen, sind in vielfältiger Weise bekannt. Als Verbrennungsmotoren haben sich dabei als besonders geeignet Zweitaktmotoren erwiesen, die eine hohe spezifische Leistung aufweisen und bei Verwendung geeigneter Vergaser lageunabhängig, also auch mit starker Schrägstellung einsetzbar sind.

Zur Schmierung von Zweitaktmotoren sind grundsätzlich zwei Prinzipien bekannt, nämlich eine Gemischschmierung, bei der Öl bereits vorab dem Kraftstoff in einem Mischungsverhältnis von 1:25 bis 1:100 beigemischt wird, sowie eine Getrenntschmierung, bei der Öl aus einem separaten Öltank durch eine Ölpumpe in das Kurbelgehäuse oder den Vergaserstutzen gepumpt wird. Beide Schmierungsmethoden unterstützen die lageunabhängige Einsetzbarkeit und auch das niedrige Gewicht von Zweitaktmotoren.

Während bei der Gemischschmierung Öl bei jedem Tankvorgang dem Kraftstoff beigemengt werden muß, ist es bei der Getrenntschmierung erforderlich, den separaten Öltank regelmäßig nachzufüllen, da es sich bei Zweitaktmotoren grundsätzlich um eine Verlustschmierung, also ohne Ölkreislauf, handelt. Abgesehen von dem Gewicht des zusätzlichen Öltanks, dem Erfordernis einer regelmäßigen Reinigung und auch der Bereitstellung einer Öltankanzeige sind Sicherheitseinrichtungen erforderlich, die ein Starten des Motors ohne ausreichende Ölvorräte verhindern. Diese Einrichtungen erhöhen die Komplexität und das Gewicht des an sich einfachen und robusten Zweitaktmotors erheblich.

Aus der DE 198 00 904 A1 ist ein Verbrennungsmotor für ein Arbeitsgerät bekannt, bei dem ein Nockentrieb für eine Ventilsteuerung des Motors mittels eines Ölsumpfs geschmiert wird. Durch die Drehbewegung der zum Nokkentrieb gehörenden Zahnräder wird ein Ölnebel erzeugt, der in ein Kurbelgehäuse des Motors geführt werden kann und dort die sich bewegenden Teile schmiert.

Der Erfindung liegt die Aufgabe zugrunde, ein Arbeitsgerät mit einem Schmiersystem für den Verbrennungsmotor anzugeben, bei dem die Komplexität gegenüber aus dem Stand der Technik bekannten Schmiersystemen verringert ist.

Die erfindungsgemäße Lösung der Aufgabe ist in Patentanspruch 1 angegeben.

Die Erfindung geht von der Erkenntnis aus, dass bei dem Arbeitsgerät bereits Öl in großer Menge vorhanden ist, nämlich zum Schmieren der Bewegungswandel-einrichtung, also des Getriebes in dem Gehäuse. Dieses Öl wird erfindungsgemäß nun auch dazu verwendet, den Verbrennungsmotor zu schmieren. Das Öl aus dem Getriebe wird folglich im Laufe der Zeit verbraucht. Ein zusätzlicher Öltank wie bei der bekannten Getrenntschmierung oder ein Betanken des Arbeitsgeräts mit einem Öl-Kraftstoff-Gemisch ist somit nicht erforderlich.

Vorteilhafterweise ist der Verbrennungsmotor ausschließlich durch das Öl aus dem Gehäuse schmierbar und die in dem Gehäuse vorhandene Ölmenge derart bemessen, dass sie zur Schmierung der Bewegungswandeleinrichtung und des Verbrennungsmotors während eines vordefinierten Serviceintervalls ausreicht. Dadurch wird der Bediener von der Pflicht befreit, regelmäßig den Ölstand zu überprüfen, Öl nachzufüllen oder ein Gemisch zu tanken. Vielmehr wird das Nachfüllen des Öls in das die Bewegungswandeleinrichtung aufnehmende Gehäuse durch einen Fachmann im Rahmen einer Serviceinspektion durchgeführt, die bei derartigen hochbeanspruchten Arbeitggeräten ohnehin regelmäßig vorgenommen werden muß.

Vorteilhafterweise ist eine Fördereinrichtung zum Fördern von Öl aus dem die Bewegungswandeleinrichtung umgebenden Gehäuse zu dem Verbrennungsmotor vorgesehen.

Da die vorhandene Ölmenge somit begrenzt ist, ist ein äußerst wirtschaftlicher Umgang mit dem Öl beim Schmieren des Öl verbrauchenden Verbrennungsmotors erforderlich.

Bei einer besonders vorteilhaften Ausführungsform der Erfindung liegt daher das dem Verbrennungsmotor zugeführte Öl in Form eines Ölaerosols, das heißt als Ölnebel vor. Das Ölaerosol wird dabei in dem Gehäuse durch die Bewegungswandeleinrichtung erzeugt, in der sich zahlreiche Bauteile mit hoher Geschwindigkeit bewegen, wodurch das in einem Sumpf vorhandene Öl in Form von Tröpfchen hochgeschleudert und feinst vernebelt wird.

Das Öl bzw. Ölaerosol wird bei einer vorteilhaften Weiterentwicklung der Erfindung durch eine mit der Fördereinrichtung gekoppelte Sammeleinrichtung in dem Gehäuse gesammelt. Zum Unterstützen des Sammelvorgangs ist es zweckmäßig, wenn die Fördereinrichtung eine Saugeinrichtung aufweist. Um das Öl zum Verbrennungsmotor transportieren zu können, ist es weiterhin vorteilhaft, wenn die Fördereinrichtung eine Druckerzeugungseinrichtung zum Erzeugen eines Druckgradienten zwischen der Gehäuseseite und der Verbrennungsmotorseite aufweist. Die Druckerzeugungseinrichtung kann weiterhin dazu dienen, das Öl bzw. Ölaerosol unter Druck zu setzen und am Verbrennungsmotor einzuspritzen.

Bei einer besonders vorteilhaften Ausführungsform der Erfindung weist die Druckerzeugungseinrichtung einen Druckspeicher auf, der mit einer Verbrennungskammer des Verbrennungsmotors gekoppelt ist. Nach Zündung des Luft-Kraftstoffs-Gemisches steigt der Druck in dem Verbrennungsmotor schlagartig an, wobei ein Teil des hohen Drucks in Form von unter Druck stehendem Abgas aus der Verbrennungskammer in den Druckspeicher gelangt.

Wie oben bereits erörtert, muß das vorhandene Öl bzw. Ölaerosol äußerst sparsam verwendet werden, damit der Ölvorrat über das Serviceintervall ausreicht. Als besonders vorteilhaft hat es sich dabei erwiesen, wenn das Öl oder Ölaerosol in einem Bereich einer Berührungsfläche zwischen einem Kolben und einem Zylinder des Verbrennungsmotors ausbringbar ist. Die Berührungsfläche ist der Bereich des Verbrennungsmotors, der tribologisch am höchsten belastet ist und somit am meisten einer Schmierung bedarf.

Bei einer besonders vorteilhaften Ausführungsform der Erfindung ist ein von der Fördereinrichtung gespeister Ölauslass vorgesehen, durch den das Öl oder Ölaerosol je nach Stellung des Kolbens im Zylinder auf eine Lauffläche des Kolbenschafts und auf eine gegenüber von dem Ölauslass liegende Lauffläche des Zylinders ausbringbar ist. Dadurch läßt sich gezielt die Berührungsfläche zwischen Kolben und Zylinder mit Öl bzw. Ölaerosol benetzen.

Die das Öl vom Gehäuse zum Verbrennungsmotor leitende Fördereinrichtung ist vorteilhafterweise in Abhängigkeit vom Betriebszustand des Motors ansteuerbar. So hat sich zum Beispiel herausgestellt, dass der Verbrennungsmotor im Leerlaufzustand keine Schmierung benötigt, während im Volllastzustand ein erhöhter Schmierungsbedarf besteht. Die Ansteuerbarkeit der Fördereinrichtung verbessert die Möglichkeiten, mit den nur begrenzt vorhandenen Ölvorräten wirtschaftlich umzugehen, nochmals erheblich.

Diese und weitere Vorteile und Merkmale der Erfindung werden nachfolgend anhand bevorzugter Beispiele unter Zuhilfenahme der begleitenden Figuren näher erläutert.

Es zeigen:
- **Figur 1**: schematisch den Aufbau eines erfindungsgemäßen Arbeitsgeräts:
- **Figur 2**: einen Stampfer zur Bodenverdichtung als Beispiel für ein erfindungsgemäßes Arbeitsgerät;
- **Figur 3**: einen Schnitt durch einen Verbrennungsmotor in Richtung der Pfeile A in Figur 2, wobei ein Kolben im unteren Totpunkt steht;
- **Figur 4**: einen Schnitt gemäß Figur 3, wobei der Kolben kurz vor, dem oberen Totpunkt steht; und
- **Figur 5**: schematisch eine zur Erfindung gehörende Druckerzeugungseinrichtung.

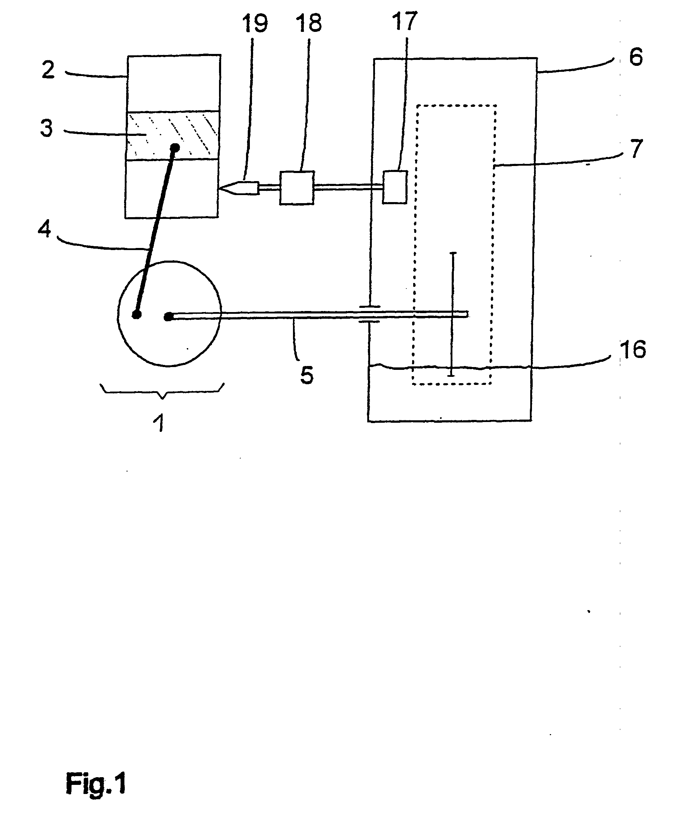

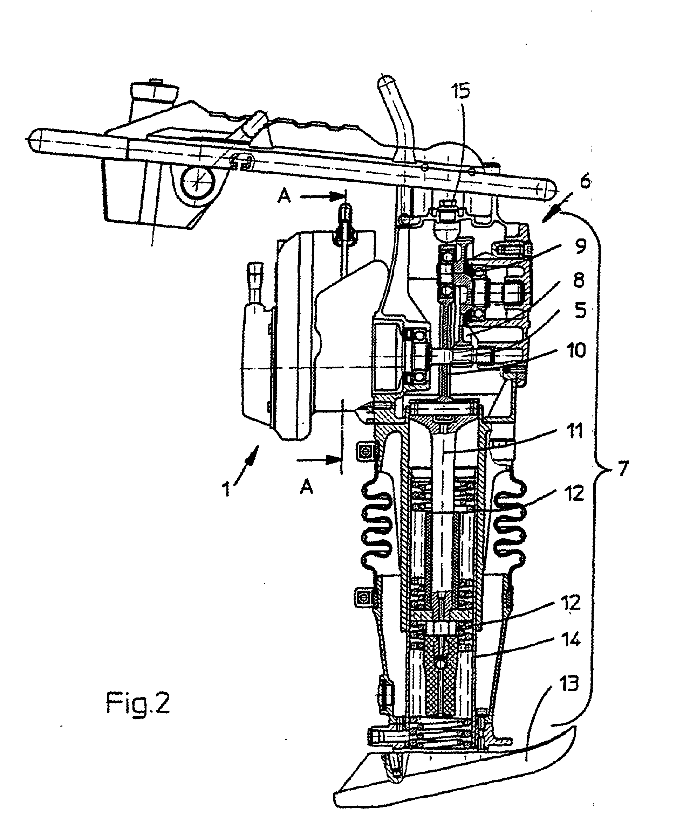

Figur 1 zeigt schematisch den Aufbau eines erfindungsgemäßen Arbeitsgerätes, bei dem es sich zum Beispiel um einen in Figur 2 in Teilschnittdarstellung gezeigten handgeführten Stampfer zur Bodenverdichtung handeln kann. Prinzipiell gleiche Bauteile in den Figuren 1 und 2 werden daher auch mit gleichen Bezugszeichen gekennzeichnet.

In einem als Zweitaktmotor ausgebildeten, an sich bekannten Verbrennungsmotor 1 sind in bekannter Weise ein Zylinder 2 und ein im Zylinder 2 beweglicher Kolben 3 angeordnet, der über ein Pleuel 4 eine Kurbel- bzw. Antriebswelle 5 in Drehbewegung versetzt.

Die Antriebswelle 5 erstreckt sich aus dem Gehäuse des Verbrennungsmotors 1 in ein Gehäuse 6, das eine Bewegungswandeleinrichtung 7 umgibt. Die Bewegungswandeleinrichtung 7 umfaßt bei dem Stampfer gemäß Figur 2 ein Zahnradpaar 8, einen Kurbeltrieb 9 sowie einen über ein Pleuel 10, angetriebenen Stampfkolben 11, der über ein Federsystem 12 ein zu einem Stampffuß 13 gehörendes Rohr 14 in Stampfbewegung versetzt. Da dieses Wirkprinzip seit langem bekannt ist, erübrigt sich seine weitere detaillierte Beschreibung. Die Bewegungswandeleinrichtung 7 ist in Figur 1 lediglich schematisch in Form eines Zahnrads und eines dieses umgebenden, gestrichelten Rahmens skizziert.

Die Bewegungswandeleinrichtung 7 kann also verschiedene Arten von Zahnradgetrieben, Kurbelgetrieben usw. aufweisen und dient im wesentlichen zum Wandeln von Bewegungsrichtungen, Bewegegungsarten (translatorisch, rotatorisch; kontinuierlich, intermittierend, oszillierend, stoßartig. etc.) und Bewegungsgeschwindigkeiten.

Die sich bewegenden Bauteile der Bewegungswandeleinrichtung 7 werden durch Öl geschmiert. Bei dem in Figur 2 gezeigten Beispiel wird Öl nach Entfernen einer Öleinlaßschraube 15 in das Gehäuse 6 und die Bewegungswandeleinrichtung 7 eingefüllt und sammelt sich schließlich in Form eines Ölsumpfes am Stampffuß 13, das heißt in dem Rohr 14.

Aufgrund der hohen Geschwindigkeiten der sich bewegenden Bauteile der Bewegungswandeleinrichtung 7 wird ständig Öl hochgeschleudert und in Form von großen und kleinen Tröpfchen verwirbelt. Nach kurzer Zeit bereits bildet sich in dem Gehäuse 6 ein aus Ölaerosol bestehender Ölnebel aus feinsten Öltröpfchen aus, der alle zu schmierenden Teile benetzt.

Bei dem erfindungsgemäßen Arbeitsgerät wird dieses im Gehäuse 6 wirbelnde Ölaerosol abgegriffen und zum Verbrennungsmotor 1 geführt, um dort ebenfalls zur Schmierung zu dienen.

Dazu ist in dem Gehäuse 6 eine Sammeleinrichtung 17 vorgesehen, die im wesentlichen eine Öffnung im Gehäuse 6 darstellt, in die das Ölaerosol eintreten kann. An dieser Stelle kann es zweckmäßig sein, ein Filter oder ein poröses, schwammähnliches Material vorzusehen, um das Ölaerosol zu filtern bzw. lediglich die feinsten Öltröpfchen hindurchzulassen, nicht jedoch eventuell vorhandene Schmutzpartikel.

Über eine Fördereinrichtung 18 wird das Ölaerosol von der Sammeleinrichtung 17 zu einem als Düse 19 ausgebildeten Ölauslass geführt. Die Fördereinrichtung 18 kann in vielfältiger Weise ausgebildet sein. So hat sich zum Beispiel herausgestellt, dass Ölaerosol sich durch Schläuche mit sehr kleinem Durchmesser auch über eine längere Entfernung transportieren läßt. Somit genügt bereits die Erzeugung eines geringen Druckgradienten, um Öl von der Sammeleinrichtung 17 zur Düse 19 zu transportieren.

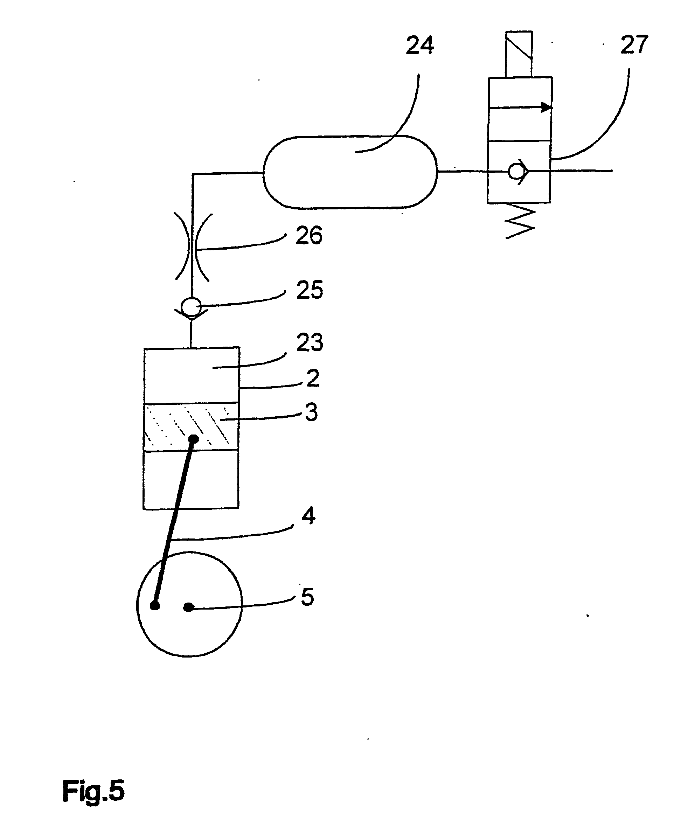

Im wesentlichen hängt die Ausbildung der Fördereinrichtung 18 davon ab, ob und mit welcher Stärke ein Druck an der Düse 19 erzeugt werden muß. Abgesehen von dem Fachmann geläufigen Fördereinrichtungen hat sich auch eine Druckerzeugungseinrichtung als vorteilhaft erwiesen, die später unter Bezugnahme auf Figur 5 erläutert wird. Ebenso kann es zweckmäßig sein, dass der Fördereinrichtung 18 Öl in flüssiger Form, also nicht als Ölaerosol, zugeführt wird, und erst durch die Fördereinrichtung 18 in ein Aerosol gewandelt wird. Dazu eignen sich Techniken, die aus dem Bereich von Tintenstrahldruckern bekannt sind (Bubble-Jet- oder Ink-Jet-Prinzip). Dementsprechend können zum Beispiel auch Piezoaktoren Verwendung finden. Da die zu fördernden Öl- bzw. Ölaerosolmengen sehr gering sind, genügt auch eine minimale Förderleistung der Fördereinrichtung 18.

Um einen möglichst wirtschaftlichen Verbrauch des Öls im Verbrennungsmotor 1 zu ermöglichen, wird bei dem erfindungsgemäßen Arbeitsgerät nur der Teil des Verbrennungsmotors 1 mit Öl benetzt, der tribologisch am höchsten beansprucht ist. Dabei handelt es sich um die Berührfläche zwischen dem Kolben 3 und dem Zylinder 2, insbesondere um die Berührfläche von in den Kolben 3 eingelegten Kolbenringen 20 mit dem Zylinder 2.

Als besonders vorteilhaft hat sich dabei erwiesen, das sogenannte Kolbenhemd, das heißt einen Kolbenschaft 21 unterhalb der Kolbenringe 20 mit Öl zu benetzen.

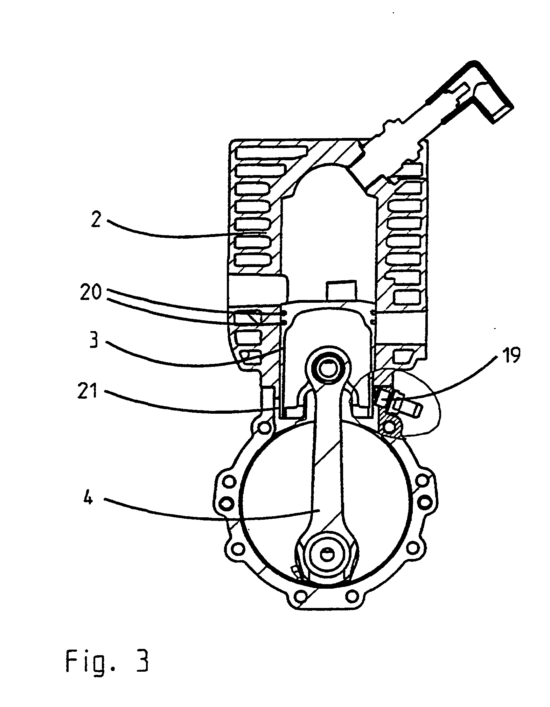

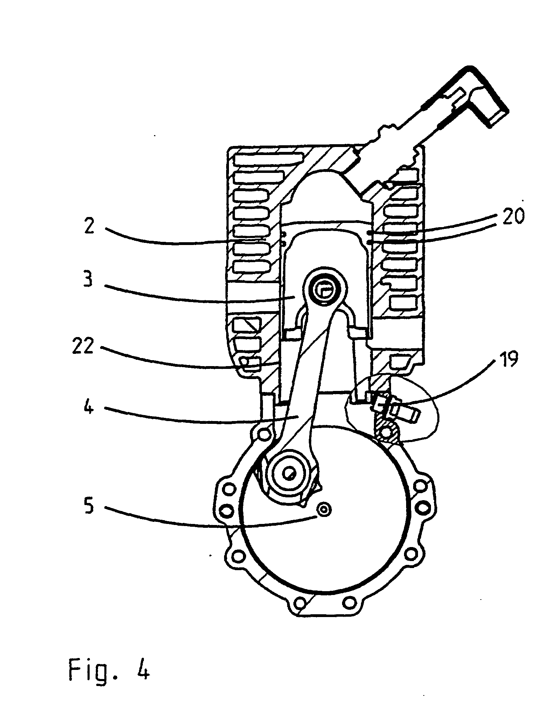

Die Figuren 3 und 4 zeigen einen Schnitt durch den Verbrennungsmotor 1 aus Figur 2, gesehen in Richtung der Pfeile A.

In Figur 3 steht der Kolben 3 im unteren Totpunkt, wie an der Relativstellung zwischen dem Pleuel 4, dem Kolben 3 und dem Zylinder 2 erkennbar ist. Die Figur 4 zeigt dementsprechend eine Stellung kurz vor Erreichen des oberen Totpunkts.

In den Kolben 3 sind die Kolbenringe 20 eingelegt.

Unterhalb einer Zylinderlauffläche 22, also der Innenfläche des Zylinders 2, ist die bereits in Zusammenhang mit Figur 1 erörterte, als Ölauslass dienende Düse 19 schräg nach oben gerichtet eingesetzt. Wie aus Figur 3 erkennbar ist, kann über die Düse 19 Öl bzw. Ölaerosol auf den Kolbenschaft 21 aufgesprüht werden, wenn sich der Kolben 3 im unteren Totpunkt befindet. Dann nämlich ist die Außenfläche des Kolbenschafts 21 frei zugänglich.

Wenn sich dagegen der Kolben 3 nach oben in den Zylinder 2 bewegt hat, wird die Lauffläche 22 des Zylinders 2 freigelegt, die dann durch die Düse 19 mit Öl benetzt werden kann. Damit ist es möglich, die am höchsten beanspruchten Teile des Verbrennungsmotors 1 mit geringsten Ölmengen ausreichend zu schmieren. Die bereits oben erörterte Ansteuerung der Fördereinrichtung 18 kann zum Bespiel derart ausgebildet sein, dass sie die jeweilige Kolbenstellung berücksichtigt und nur zu den geeigneten Zeitpunkten Öl aufbringt. Die Einspritzung des Öls kann selbstverständlich auch kontinuierlich erfolgen.

Anstelle der Düse 19 kann auch ein Düsenring verwendet werden, der sich um den Umfang des Kolbens 3 erstreckt. Um den Ölverbrauch noch weiter zu reduzieren, hat sich die Verwendung von sogenannten einseitigen Trapezringen als Kolbenringe 20 als vorteilhaft erwiesen. Außerdem sollte der Kolbenschaft 21 mit einer Notlaufbeschichtung, zum Beispiel aus Graphal® versehen werden.

Die weiteren beweglichen Teile des Verbrennungsmotors 1, die jedoch nicht oder nicht ausreichend mit Öl geschmiert werden, müssen eine Lebensdauerschmierung erhalten bzw. aus geeigneten Materialien bestehen, um einer höheren thermischen Belastung zu widerstehen. Jedoch ist davon auszugehen, dass am Kolben 3 geringe Restölmengen austreten, die zur Schmierung der anderen Bauteile genutzt werden können. Alle anderen, Schmiermittel benötigenden Gleitflächen (zum Beispiel Kurbelwellenlagerung) können mit abgedichteten, lebensdauergeschmierten Lagern ausgestattet sein.

Durch die beschriebenen Maßnahmen war es möglich, das Mischungsverhältnis von Öl zu Benzin auf 1:800 zu verbessern. Das bedeutet, dass die im Gehäuse 6 des Arbeitsgeräts vorhandene Ölmenge ausreicht, um die Schmierung sowohl der Bewegungswandeleinrichtung 7 als auch des Verbrennungsmotors 1 während eines gesamten Serviceintervalls zu gewährleisten. Nach Ablauf des Serviceintervalls muß das Arbeitsgerät ohnehin einer fachmännischen Inspektion unterzogen werden. Bei dieser Gelegenheit wird dann auch der Ölvorrat im Gehäuse 6 wieder aufgefüllt.

Figur 5 zeigt eine erfindungsgemäße Möglichkeit zur Bereitstellung von Druck, der durch die Fördereinrichtung 18 genutzt werden kann.

Zu diesem Zweck ist ein durch den Zylinder 2 und den Kolben 3 gebildeter Verbrennungsraum 23 mit einem Druckspeicher 24 über ein Rückschlagventil 25 und eine Drossel 26 verbunden. Ein weiteres Ventil 27 ist zur Entleerung des Druckspeichers 24 bzw. zur Entnahme des druckbehafteten Gases vorgesehen.

Nach Zündung des Luft-Kraftstoff-Gemisches im Verbrennungsraum 23 entsteht schlagartig ein sehr hoher Druck, der nicht zuletzt dazu verwendet wird, den Kolben 3 nach unten zu bewegen und die Antriebswelle 5 anzutreiben. Ein Teil des unter hohem Druck stehenden Abgases in dem Verbrennungsraum 23 gelangt jedoch über das Rückschlagventil 25 in den Druckspeicher 24. Mit jedem Verbrennungstakt erhöht sich somit der Druck im Druckspeicher 24, bis schließlich am Rückschlagventil 25 ein Druckgleichgewicht besteht. Der im Druckspeicher 24 vorhandene Druck stellt ein Energiemedium dar, das zum Antrieb bzw. zur Unterstützung der Fördereinrichtung 18 verwendet werden kann.

Zur Begrenzung des Drucks im Druckspeicher 24 kann ein nicht dargestelltes 2/2-Wegeventil zum Einsatz kommen, das bei Erreichen eines vorgegebenen Drucks die weitere Aufladung des Druckspeichers 24 unterbricht. Erst wenn der Druck im Druckspeicher 24 unter den vordefinierten Steuerdruck gefallen ist, ermöglicht das Wegeventil ein Nachladen des Druckspeichers 24. Der Druckspeicher 24 muß nicht in Form eines üblichen Speichers mit Membran und Gasfüllung ausgebildet sein. Unter Umständen genügt bereits das Vorhandensein eines kurzen Leitungsstücks, um ausreichend Druck für die Fördereinrichtung 18 zu speichern und bereitzustellen.

## Patentansprüche

1. Bodenverdichtungsgerät, mit
- einem Verbrennungsmotor (1) mit wenigstens einem Zylinder (2) und einem in dem Zylinder (2) beweglichen Kolben (3); und
- zusätzlich einer in einem Gehäuse (6) angeordneten Bewegungswandeleinrichtung (7) zum Wandeln einer von dem Verbrennungsmotor (1) erzeugten Drehbewegung in eine Arbeitsbewegung zur Bodenverdichtung;
wobei
- der Verbrennungsmotor (1) an oder in dem Gehäuse (6) angeordnet ist; und
- das Gehäuse (6) mit Öl zur Schmierung der Bewegungswandeleinrichtung (7) befüllt ist;
**dadurch gekennzeichnet, dass** der Verbrennungsmotor (1) durch das Öl aus dem Gehäuse (6) der Bewegungswandeleinrichtung (7) geschmiert wird, wobei das dem Verbrennungsmotor (1) zugeführte Öl im Bereich einer Berührungsfläche zwischen dem Kolben (3) und dem Zylinder (2) ausgebracht wird.

2. Bodenverdichtungsgerät nach Anspruch 1, **dadurch gekennzeichnet, dass** der Verbrennungsmotor (1) ausschließlich durch das Öl aus dem Gehäuse (6) geschmiert wird.

3. Bodenverdichtungsgerät nach Anspruch 1 oder 2, **dadurch gekennzeichnet, dass** eine Fördereinrichtung (18) vorgesehen ist, zum Fördern von Öl aus dem Gehäuse (6) zu dem Verbrennungsmotor (1).

4. Bodenverdichtungsgerät nach einem der Ansprüche 1 bis 3, **dadurch gekennzeichnet, dass** die in dem Gehäuse (6) vorhandene Ölmenge derart bemessen ist, dass sie zur Schmierung der Bewegungswandeleinrichtung (7) und des Verbrennungsmotors (1) während eines vordefinierten Serviceintervalls ausreicht.

5. Bodenverdichtungsgerät nach einem der Ansprüche 1 bis 4, **dadurch gekennzeichnet, dass** das dem Verbrennungsmotor (1) zugeführte Öl ein Ölaerosol ist.

6. Bodenverdichtungsgerät nach Anspruch 5, **dadurch gekennzeichnet, dass** das Ölaerosol in dem Gehäuse (6) durch die Bewegungswandeleinrichtung (7) erzeugt wird.

7. Bodenverdichtungsgerät nach einem der Ansprüche 3 bis 6, **dadurch gekennzeichnet, dass** in dem Gehäuse (6) eine mit der Fördereinrichtung (18) gekoppelte Sammeleinrichtung (17) zum Sammeln des Öls oder Ölaerosols vorgesehen ist.

8. Bodenverdichtungsgerät nach einem der Ansprüche 3 bis 7, **dadurch gekennzeichnet, dass** die Fördereinrichtung (18) eine Saugeinrichtung aufweist.

9. Bodenverdichtungsgerät nach einem der Ansprüche 3 bis 8, **dadurch gekennzeichnet, dass** die Fördereinrichtung (18) eine Druckerzeugungseinrichtung (24 bis 27) aufweist.

10. Bodenverdichtungsgerät nach Anspruch 9, **dadurch gekennzeichnet, dass** die Druckerzeugungseinrichtung einen Druckspeicher (24) aufweist, der mit einem Verbrennungsraum (23) des Verbrennungsmotors (1) gekoppelt ist, wobei ein Druck in dem Druckspeicher (24) durch Abgas aus dem Verbrennungsraum (23) während oder unmittelbar nach einem Verbrennungsvorgang erzeugt wird.

11. Bodenverdichtungsgerät nach einem der Ansprüche 3 bis 10, **dadurch gekennzeichnet, dass** die Fördereinrichtung (18) in Abhängigkeit von einem Betriebszustand des Verbrennungsmotors (1) angesteuert wird.

12. Bodenverdichtungsgerät nach einem der Ansprüche 1 bis 11, **dadurch gekennzeichnet, dass** das Öl oder Ölaerosol auf eine Lauffläche eines Kolbenschafts (21) des Kolbens (3) ausgebracht wird.

13. Bodenverdichtungsgerät nach Anspruch 12, **dadurch gekennzeichnet, dass** in oder unterhalb einer Lauffläche (22) des Zylinders (2) ein mit der Fördereinrichtung (18) gekoppelter Ölauslass (19) vorgesehen ist, durch den Öl oder Ölaerosol auf die Lauffläche des Kolbenschafts (21) sowie auf die Lauffläche (22) des Zylinders (2) ausgebracht wird.

## Claims

1. Ground-compaction device, having
- a combustion engine (1) having at least one cylinder (2) and a piston (3) which can move in the cylinder (2); and
- in addition a movement-conversion device (7), which is disposed in a housing (6), for the purpose of converting a rotational movement generated by the combustion engine (1) into a working movement for compacting the ground;
wherein
- the combustion engine (1) is disposed on or in the housing (6); and
- the housing (6) is filled with oil for the purpose of lubricating the movement-conversion device;
**characterised in that** the combustion engine (1) is lubricated by the oil from the housing (6) of the movement-conversion device (7), wherein the oil which is supplied to the combustion engine (1) is discharged in the region of a contact surface between the piston (3) and the cylinder (2).

2. Ground-compaction device as claimed in claim 1, **characterised in that** the combustion engine (1) is lubricated exclusively by the oil from the housing (6).

3. Ground-compaction device as claimed in claim 1 or 2, **characterised in that** a conveying device (18) is provided for the purpose of conveying oil from the housing (6) to the combustion engine (1).

4. Ground-compaction device as claimed in any one of claims 1 to 3, **characterised in that** the quantity of oil provided in the housing (6) is such that it is sufficient to lubricate the movement-conversion device (7) and the combustion engine (1) during a predefined servicing interval.

5. Ground-compaction device as claimed in any one of claims 1 to 4, **characterised in that** the oil which is supplied to the combustion engine (1) is an oil aerosol.

6. Ground-compaction device as claimed in claim 5, **characterised in that** the oil aerosol is generated in the housing (6) by the movement-conversion device (7).

7. Ground-compaction device as claimed in any one of claims 3 to 6, **characterised in that** the housing (6) is provided with a collecting device (17), which is coupled to the conveying device (18), for the purpose of collecting the oil or oil aerosol.

8. Ground-compaction device as claimed in any one of claims 3 to 7, **characterised in that** the conveying device (18) comprises a suction device.

9. Ground-compaction device as claimed in any one of claims 3 to 8, **characterised in that** the conveying device (18) comprises a pressure-generating device (24 to 27).

10. Ground-compaction device as claimed in claim 9, **characterised in that** the pressure-generating device comprises a pressure reservoir (24) which is coupled to a combustion chamber (23) of the combustion engine (1), wherein a pressure is generated in the pressure reservoir (24) by exhaust gas from the combustion chamber (23) during or immediately after a combustion procedure.

11. Ground-compaction device as claimed in any one of claims 3 to 10, **characterised in that** the conveying device (18) is controlled in dependence upon an operating state of the combustion engine (1).

12. Ground-compaction device as claimed in any one of claims 1 to 11, **characterised in that** the oil or oil aerosol is discharged on to a running surface of a piston shaft (21) of the piston (3).

13. Ground-compaction device as claimed in claim 12, **characterised in that** in or below a running surface (22) of the cylinder (2), there is provided an oil outlet (19) which is coupled to the conveying device (18) and through which the oil or the oil aerosol is discharged on to the running surface of the piston shaft (21) and on to the running surface (22) of the cylinder (2).

## Revendications

1. Dispositif de compactage du sol comportant
- un moteur à combustion interne (1) avec au moins un cylindre (2) et un piston (3) mobile dans le cylindre (2) ; et
- en outre un dispositif de transformation de mouvement (7) disposé dans un carter (6) pour transformer un mouvement de rotation, produit par le moteur à combustion interne (1), en un mouvement de travail pour le compactage du sol ;
dans lequel
- le moteur à combustion interne (1) est disposé sur ou dans le carter (6) ; et
- le carter 6 est rempli d'huile pour la lubrification du dispositif de transformation de mouvement (7) ;
**caractérisé en ce que** le moteur à combustion interne (1) est lubrifié par l'huile provenant du carter (6) du dispositif de transformation de mouvement (7), l'huile amenée au moteur à combustion interne (1) étant distribuée dans la zone d'une surface de contact entre le piston (3) et le cylindre (2).

2. Dispositif de compactage du sol selon la revendication 1, **caractérisé en ce que** le moteur à combustion interne (1) est lubrifié exclusivement par l'huile provenant du carter (6).

3. Dispositif de compactage du sol selon la revendication 1 ou 2, **caractérisé en ce qu'**il est prévu un dispositif de transport (18) pour transporter l'huile du carter (6) vers le moteur à combustion interne (1).

4. Dispositif de compactage du sol selon l'une des revendications 1 à 3, **caractérisé en ce que** la quantité d'huile se trouvant dans le carter (6) est telle qu'elle suffise à la lubrification du dispositif de transformation de mouvement (7) et du moteur à combustion interne (1) pendant un intervalle d'entretien prédéfini.

5. Dispositif de compactage du sol selon l'une des revendications 1 à 4, **caractérisé en ce que** l'huile amenée au moteur à combustion interne (1) est une huile aérosol.

6. Dispositif de compactage du sol selon la revendication 5, **caractérisé en ce que** l'huile aérosol est produite dans le carter (6) par le dispositif de transformation de mouvement (7).

7. Dispositif de compactage du sol selon l'une des revendications 3 à 6, **caractérisé en ce que** dans le carter (6) est prévu un dispositif de collecte (17), couplé au dispositif de transport (18), pour recueillir l'huile ou l'huile aérosol.

8. Dispositif de compactage du sol selon l'une des revendications 3 à 7, **caractérisé en ce que** le dispositif de transport (18) comporte un dispositif d'aspiration.

9. Dispositif de compactage du sol selon l'une des revendications 3 à 8, **caractérisé en ce que** le dispositif de transport (18) comporte un dispositif de production d'une pression (24 à 27).

10. Dispositif de compactage du sol selon la revendication 9, **caractérisé en ce que** le dispositif de production d'une pression comporte un accumulateur de pression (24) qui est couplé à une chambre de combustion (23) du moteur à combustion interne (1), une pression étant produite dans l'accumulateur de pression (24) par des gaz s'échappant de la chambre de combustion (23) pendant ou immédiatement après une combustion.

11. Dispositif de compactage du sol selon l'une des revendications 3 à 10, **caractérisé en ce que** le dispositif de transport (18) est commandé en fonction d'un état de fonctionnement du moteur à combustion interne (1).

12. Dispositif de compactage du sol selon l'une des revendications 1 à 11, **caractérisé en ce que** l'huile ou l'huile aérosol est distribuée sur une surface d'usure d'une tige (21) du piston (3).

13. Dispositif de compactage du sol selon la revendication 12, **caractérisé en ce que** dans ou au-dessous d'une surface d'usure (22) du cylindre (2) il est prévu une sortie d'huile (19) couplée au dispositif de transport (18), par laquelle l'huile ou l'huile aérosol est distribuée sur la surface d'usure de la tige de piston (21) ainsi que sur la surface d'usure (22) du cylindre (2).
